(19) **Europäisches Patentamt**

**European Patent Office**

**Office européen des brevets**

(11) **EP 1 508 858 A2**

(12) **EUROPEAN PATENT APPLICATION**

(43) Date of publication:
   **23.02.2005 Bulletin 2005/08**

(51) Int Cl.⁷: **G06F 11/36**

(21) Application number: **04104003.1**

(22) Date of filing: **20.08.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **22.08.2003 US 646374 P**<br><br>(71) Applicant: **Hewlett-Packard Development Company, L.P.**<br>**Houston, TX 77070 (US)** | (72) Inventors:<br>• **Bhushan, Keerthi K.N.**<br>  **Srinivasapura, Bangalore 560060 (IN)**<br>• **Sanyal, Dibyapran**<br>  **Noifs, 201301 Uttar Pradesh (IN)**<br><br>(74) Representative: **Lawrence, Richard Anthony**<br>**Hewlett-Packard Limited,**<br>**IP Section,**<br>**Building 3,**<br>**Filton Road**<br>**Stoke Gifford, Bristol BS34 8QZ (GB)** |

(54) **A method and system for executing software on non-native platforms**

(57)    A method of executing programs on a non-native platform includes the step of executing a plurality of programs in two or more software emulators, wherein during the execution of the programs at least one program monitors or controls at least one other program's threads or processes using an interface. A system for executing programs on a non-native platform includes a first software emulator adapted to execute a first program, to intercept calls from the first program to monitor or control the processes or threads of a second program, and to transmit the calls to an interface system, a second software emulator adapted to execute the second program, to receive the calls from the interface system, and to effect the calls on the processes or threads of the second program and an interface system adapted to receive the calls from the first software emulator and to transmit the calls to the second software emulator. A method of debugging a program on a non-native platform, including the steps of executing a debugging program on a first software emulator, executing the program on a second software emulator, the debugging program making calls to trace into the processes or threads of the program, and transmitting the calls using an interface from the first software emulator to the second software emulator.

EP 1 508 858 A2

**Description**

**Field of Invention**

The present invention relates to a method and system for executing software on non-native platforms. More particularly, but not exclusively, the present invention relates to a method for debugging a program on a non-native platform.

**Background**

Often there is a need to migrate software from one platform to another. To operate on the new platform the software is usually run within a software emulator which emulates the original platform.

Generally, software emulators are supposed to be used only during the initial phase of migration when application deployment (on the new platform) is of utmost importance. But in reality, software emulators continue to be used for longer times due to various reasons, such as, a native port of the application being impossible due to loss of source code or being impractical due to cost. Hence there is a need for software emulators to be capable of emulating all the tools that are needed to maintain an application on the new platform. One such tool is the debugger. In current implementations of emulators, support for debugger emulation is absent, thus restricting the utility of software emulators for migration in situations where the emulator is going to be used for the lifetime of migrated applications.

In addition, running the debugger from the host platform to debug an application migrated to a new platform is impractical for the following reasons:

(a) The debugger which the user is accustomed to may not be capable of performing across-network debugging.

(b) A debugger user may have certain debugging scripts or other methods which may have to be modified when the application is not local to the debugger.

Both of the above issues defeat the purpose of software emulators, which is to minimise the migration-related changes that the user has to undergo.

It is an object of the present invention to provide a method and system which meets the above needs and avoids the above disadvantages, or to at least provide the public with a useful choice.

**Summary of the Invention**

According to a first aspect of the invention there is provided a method of executing programs on a non-native platform, including the step of:

i) executing a plurality of programs in two or more software emulators; wherein during the execution of the programs at least one program monitors or controls at least one other program's threads or processes using an interface.

Preferably, each software emulator emulates one program and is emulating the same platform. It is further preferred that all the software emulators are executing on a single computer system. The computer system may be UNIX-based. The software emulator may be a dynamic translation software emulator such as Aries.

Preferably the interface provides communication between the software emulator of the controlling/monitoring program and the controlled/monitored program.

The controlling/monitoring program may be a debugger such as gdb-based debugger. In such as a case the controlled/monitored program may be a program that is to be debugged. Alternatively, the controlling/monitoring program may be any other type of tracing program such as truss on UNIX or tusc on HP-UX.

The interface may include three components — a first module for interfacing with the software emulator of the controlling program, a second module for interfacing with the software emulator of the controlled program, and a framework through which the first and second module can communicate.

It is preferred that the framework is an inter-process data exchange mechanism. The mechanism may be an inter-process communication primitive such as a pipe, a socket, or a shared memory area.

The interface may provide an additional system to enable the software emulators to communicate with each other over a network.

The second module may include a thread which polls for requests received through the framework and services the requests when they are received.

The controlling program may generate system calls which may be intercepted by the software emulator and processed by the first module. The system calls may be trace or trace-wait system calls.

According to a further aspect of the invention there is provided a system for executing programs on a non-native platform including:

i) a first software emulator adapted to execute a first program, to intercept calls from the first program to monitor or control the processes or threads of a second program, and to transmit the calls to an interface system;
ii) a second software emulator adapted to execute the second program, to receive the calls from the interface system, and to effect the calls on the processes or threads of the second program; and
iii) an interface system adapted to receive the calls from the first software emulator and to transmit the calls to the second software emulator.

According to a further aspect of the invention there is provided a method of debugging a program on a non-native platform, including the steps of:

i) executing a debugging program on a first software emulator;
ii) executing the program on a second software emulator;
iii) the debugging program making calls to trace into the processes or threads of the program; and
iv) transmitting the calls using an interface from the first software emulator to the second software emulator.

**Brief Description of the Drawings**

Embodiments of the invention will now be described, by way of example only, with reference to the accompanying drawings in which:

Figure 1: shows a block diagram of a possible application of the invention.

Figure 2: shows a diagram illustrating a typical debugging process on a native platform.

Figure 3: shows a block diagram of a system implementing the invention.

Figure 4: shows a diagram illustrating a debugging process on a non-native platform using a method of the invention.

Figure 5: shows a diagram illustrating how the invention may be deployed.

**Detailed Description of the Preferred Embodiments**

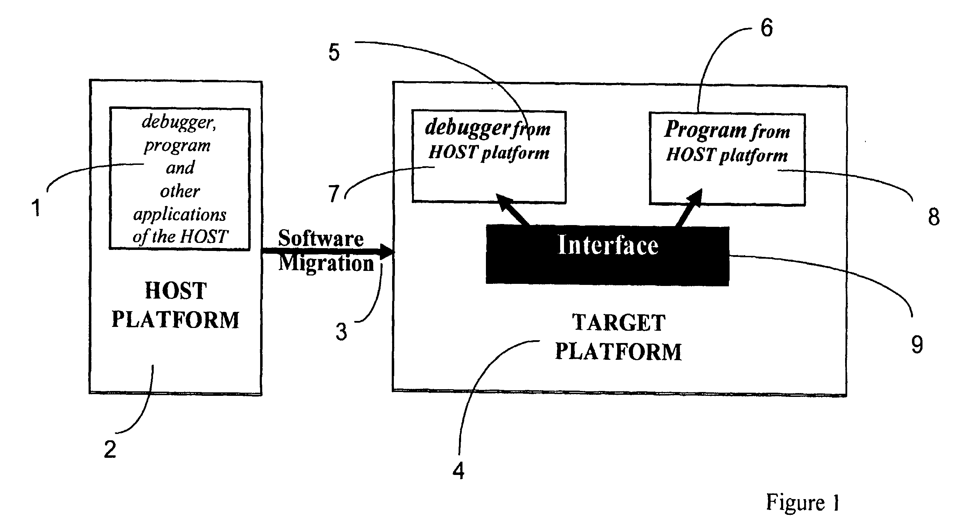

The present invention relates to a method and system for executing programs on non-native platforms when one of the programs must monitor/control the threads/processes of another.
The invention has particular application as a mechanism to perform cross-platform debugging of software programs during their migration from one platform (host) to another (target).
Referring to Figure 1, software 1 on the host platform 2 has been migrated in step 3 to a target platform 4. The software includes a *debugger* 5 and a *program* 6. The host platform *program* is run on the target platform and is being debugged on the target platform itself with the help of the host platform's *debugger.*
The *program* 6 and the *debugger* 5 are executed within two instances 7 and 8 of a software emulator, and an interface 9 between the two instances is provided to enable the debugger to trace into the threads/processes of the program.
In this example, the program and the debugger are native to the host platform and are executed on the non-native target platform. It will be appreciated that the debugger and program may not be executing on the same target platform and that the interface may provide a method for the debugger and program to interface over a network. For example, the program may be executed on a software emulator on machine 1 of the target platform and the debugger may be executed on a software emulator on machine 2 of the target platform.
The interface will be termed a "Trace-Call Emulation Engine" (TCE), which, when augmented to a software emulator, makes cross-platform debugging possible. The Trace-Call Emulation Engine and the software emulator together enable the host platform's debugger to:

(a) run on the target platform; and
(b) control the execution of another host platform software running on the target platform via the second instance of the software emulator.

It will be appreciated that the invention may have application for any scenario where a program (controlling program) needs to monitor/control another program (controlled program) on a non-native platform. For example, the controlling program might be one used for tracing into another program such as *truss* on Solaris UNIX or *tusc* on HP-UX.

In this example the *debugger* is the controlling program and the *program* is the controlled program.

The method of the invention is preferably implemented on a system which supports trace and trace-wait system calls.

*Trace call*

The *trace* call provides a means by which a process can control the execution of another process. Its primary use is for the implementation of breakpoint and event driven debugging. The *trace* call functions for both single and multithreaded traced processes. The traced process behaves normally until one of its threads encounters an exception (signal on Unix OS), or an event at which time the thread enters a stopped state (effected by the OS) and the tracing process is notified via *trace-wait* call.

A tracing process (debugger) can set *event flags* in the context of a traced process, or its individual threads, to cause the threads to respond to specific events during their execution. When an *event-flag* is set in the context of the process, all threads in the process respond to the event. When set in the context of a thread, only the specific thread will respond to the event. A *trace* call can be directed either at the whole process or at a specific thread in the process.

*Trace-wait call*

The *trace-wait* call provides a means to wait for a trace-event to occur. A tracing process (debugger) will normally invoke *trace-wait* after the traced process or any of its threads has been set running. *Trace-wait* synchronizes tracing requests directed at threads within the traced process. The debugger can wait for process-wide events and/or thread-specific events. The *trace-wait* call can be performed either in a blocking mode or a non-blocking mode.

*Typical debugging process on a native platform*

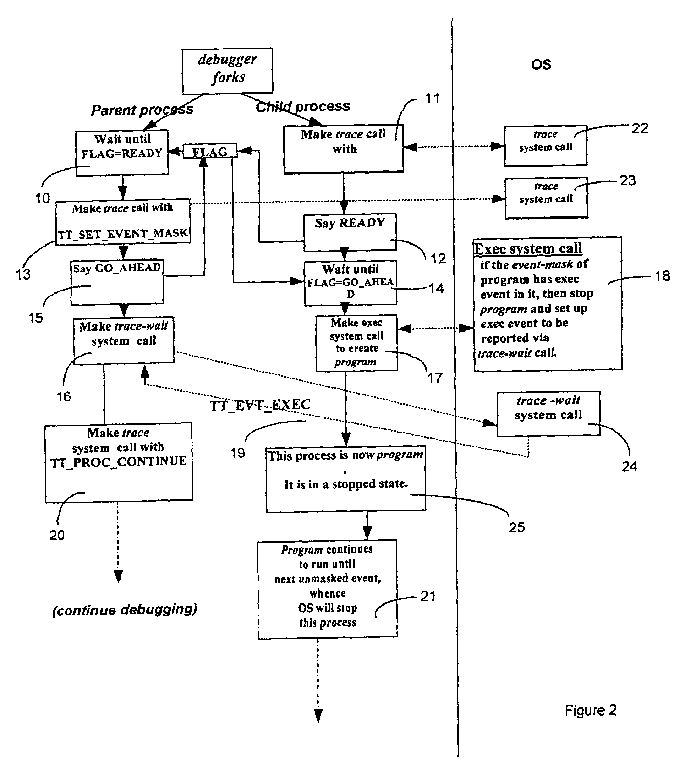

With reference to Figure 2, a typical debugging process involving a debugger and a program executing on a native platform will be described.

A user starts the debugger and passes the name of the program to debug to it. In this example the debugger relies on TT_EVT_EXEC event from the OS in order to set up the debugging.

A means of communication (FLAG) is established by the parent and child processes before arriving at steps 10 and 11. In step 10, the parent debugger waits until the child debugger says that it has now permitted itself to be traced by the parent, with the help of the OS.

In step 11, the child debugger makes a *trace* call 22 in the OS with TT_PROC_SETTRC request. The OS, from then on will mark this process as a "traced" process and will favourably process future *trace* and *trace-wait* calls made by the debugger with this child process as the target. Steps 10 and 11 may occur concurrently.

In step 12, the child process has successfully performed the *trace* call and communicates the same to the parent debugger via FLAG.

In step 13, the debugger now makes a *trace* call 23 to set an *event-mask* on the child process. This event mask will inform the OS as to which event the OS should consider for reporting to the debugger. In the current example, the debugger requests that if a TT_EVT_EXEC event occurs in the child process it is reported.

In step 14, the child process waits until the debugger has finished step 13.

In step 15, the debugger asks the child process to go ahead with *exec*'ing the *program* via FLAG.

After the debugger has finished with step 15, it goes on to wait in step 16 for the child process to encounter TT_EVT_EXEC. To do this it makes a *trace-wait* call 24 in the OS, in blocking mode. This means that OS should stop the debugger itself until the child process hits upon at least one event in the *event-mask* as set by the debugger for that child process.

In step 17, whilst the debugger is blocking in *trace-wait* call, the child process goes on to *exec* the *program.* The OS will retain the *event-mask* and the SETTRC status that was set for the child process, for the new process *program* also.

In step 18, the OS recognizes that the child process has hit upon the event TT_EVT_EXEC which is demanded by the debugger earlier to be reported to it via the *trace-wait* call. Therefore, the OS first stops the child process at step 25 and sets up the concerned event.

In step 19, as soon as the child process performs step 17, the OS will remove the debugger from the blocking state within *trace-wait* call, and return the TT_EVT_EXEC event data to it. This data contains all the information about the child process at that stage of this execution.

Before entering step 20, the debugger has obtained the event data from the OS and has come out of the blocking *trace-wait* call. From now on the child process is completely under the control of the debugger. In step 20, the debugger performs a *trace* call and requests the OS to continue the child process.

In step 21, the OS continues the child process. Now the exec happens and the child process becomes *program.* This *program* is subject to the same event mask that was set by the debugger on the child process in step 13 above.

From now on the debugger can perform various *trace* calls on *program,* while waiting in between for the *program* to stop at events, via *trace-wait* calls.

### *A system for implementing the invention*

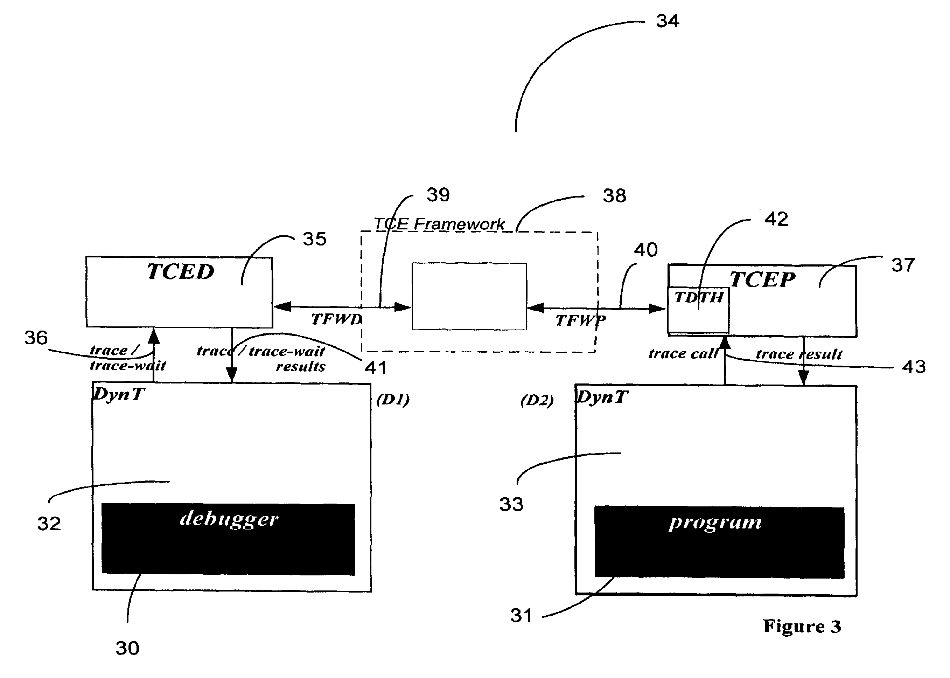

A system for implementing the invention will now be described in detail with reference to Figure 3.

The debugger 30 and the program 31 are executed on the target platform within two instances 32 and 33 of a software emulator.

An interface 34, TCE, is provided to enable the two instances of the software emulator to communicate.

The interface includes:

a) A module (TCED) 35 which is responsible for processing trace and *trace-wait* calls 36 made by the *debugger.*

b) A module (TCEP) 37 which is responsible for servicing the *requests* passed to it by *TCED*.

c) A framework (TCE Framework) 38 which enables TCED 35 and TCEP 37 to communicate with one another. The framework 38 comprises TFWD 39 (for transferring information to/from TCED) and TFWP 40 (for transferring information to/from TCEP) which together form an inter-process data exchange mechanism.

### *The software emulator*

A software emulator is a program that automatically runs an application belonging to one platform (host) on another platform (target).

In this implementation the software emulator is a "dynamic translation"-based software emulator. It will be appreciated that other types of software emulators may be used.

A dynamic translation software emulator uses a method of accelerating emulation by converting code sequences from the non-native software to code sequences which will run on the native architecture, on the fly. After a code sequence has been translated, the next time the execution path reaches that point, the translated code is run, rather than interpreting it.

An example of a dynamic translation software emulator is Aries which is an emulator that transparently runs all HP-UX/PA-RISC applications on HP-UX/IPF.

The preferred software emulator (*DynT*) has at least the following functionalities:

1. Whenever a software belonging to host platform is run on the target platform, it is automatically (or with user's help) emulated by the *DynT* i.e. a host platform software can run on the target platform only with the help of *DynT.*

2. *DynT intercepts* each entry of the *program* into OS mode and inform *TCE* that such an entry is about to happen.

3. *DynT* informs *TCE* about all the exceptions that the *program* encounters.

4. *DynT* maintains the following information about the *program.*

i. Information about each thread in the *program* is globally maintained - called **Thd_id** hereafter. (**Thd_id** contains, importantly, **Thd_id.state** and **Thd_id.tContext**) - **Thd_id.state** is the state of the thread (running, stopped, etc.) and **Thd_id.tContext** is the thread's run-time context; this consists of all the emulated host platform machine register state, instruction pointer/address, stack pointer, global data pointer, thread-specific event mask, etc.

ii. The *program's* process-wide information - called **Pdata** hereafter. It contains *program*-wide information such as program-wide event masks, signal-masks, etc.

iii. Information about each exception, pending delivery, for either the process or a thread in the process, is maintained - called **Sig_id** hereafter. The exception pending delivery to ANY thread in the process is maintained in **Pdata.Sig_id** and those pending delivery to a specific thread are maintained in **Thd_id.Sig_id.**

*iv.* The translated code (if cached somewhere, then the cache area's start address) - called **Ccache** hereafter - This is taken to be a process global.

5. DynT checks **Thd_id.break_after_one_inst** flag before emulating each instruction, and if this flag is set, reports the same to *TCE.*

6. All the three repositories of information in 4 above, will be accessible to *TCE* or reading and writing. *DynT makes* available to *TCE* all the mechanisms needed to read and write **Ccache.**

In this example, a first instance 32 DynT (D1) of the software emulator emulates the debugger and a second instance 33 DynT (D2) of the software emulator emulates the program.

*DynT* intercepts each *trace-call* and passes on the parameters to *TCED* and *TCEP* on the *debugger* and the *program* side respectively. *DynT* passes on the values returned by *TCED* or *TCEP* to the emulated debugger/program.

*The TCED Module*

*TCED* 35 is interfaced to the *DynT* 32 on the *debugger* side and is invoked by the *DynT* (D1) 32 at start-up. The *DynT* 32 intercepts each *trace/trace-wait* call 36 made by the *debugger* 30 and passes all the parameters of the call to *TCED* 35. *TCED* 35, in turn, *atomically* processes the *trace/trace-wait request* in one of the following ways:

(a) by making a corresponding *trace* call in the OS;

(b) by completely emulating the *trace request* on its own; or

(c) by communicating with *TCEP* 37, via the *TCE Framework* 38, so that *TCEP* 37 performs the task pertaining to that *request* and returns back the results via the *TCE Framework* 38.

Results of the calls 41 are transmitted by TCED 35 back to the DynT (D1) 32.

*The TCEP Module*

*TCEP* 37 is interfaced to the DynT (D2) 33 on the *program* side. *TCEP* 37 is invoked by the *DynT* (D2) 33 and is essentially comprised of two components:

(a) A special thread 42 called *TDTH.* The *TDTH* thread is created as part of the *program.* It is mainly responsible for polling for *requests* on the *TCE Framework* and servicing them when they arrive.

(b) Event generation and reporting structures.

As well as servicing the *request* passed to it by *TCED* via the *TCE Framework, TCEP* is also responsible for processing trace and *trace-wait* calls 43 made by the *program.* However, in this example the *program* doesn't make any *trace/trace-wait* calls, except for one occasion in the debugging initialization stage when a *trace* call is made with the *request* as TT_PROC_SETTRC.

*The TCE Framework*

*TFWD* 39 and *TFWP* 40 together form an inter-process data exchange mechanism 38.

In this example, the *TCE Framework* 38 is a shared memory area. However, in a Unix-like environment *TCE Framework* may be any inter-process communication primitive such as a pipe, socket, or shared memory area. A shared memory area is the preferred choice if the debugging is not across systems.

A section of the *TCE Framework* is provided below:

| (TFWD.) | req | (TFWP.) |
|---------|--------|---------|
| (TFWD.) | status | (TFWP.) |
| (TFWD.) | data1 | (TFWP.) |

(continued)

| (TFWD.) | data2 | (TFWP.) |
|---------|-------|---------|
| (TFWD.) | event | (TFWP.) |

- "req" - this field takes values corresponding to a *request*

- "status" - this field can take one of the following values:

  *1) REQ_READY*
  *2) RESPONSE_READY*
  *3) NO_REQ*

REQ_READY will be posted by *TCED* and RESPONSE_READY will be posted by *TCEP*.

- "data1" and "data2" - these two fields are used for communicating data such as thread id's, addresses, offsets, event-masks.

- "event" - this field is written to by *TCEP.*

### A method for implementing the invention

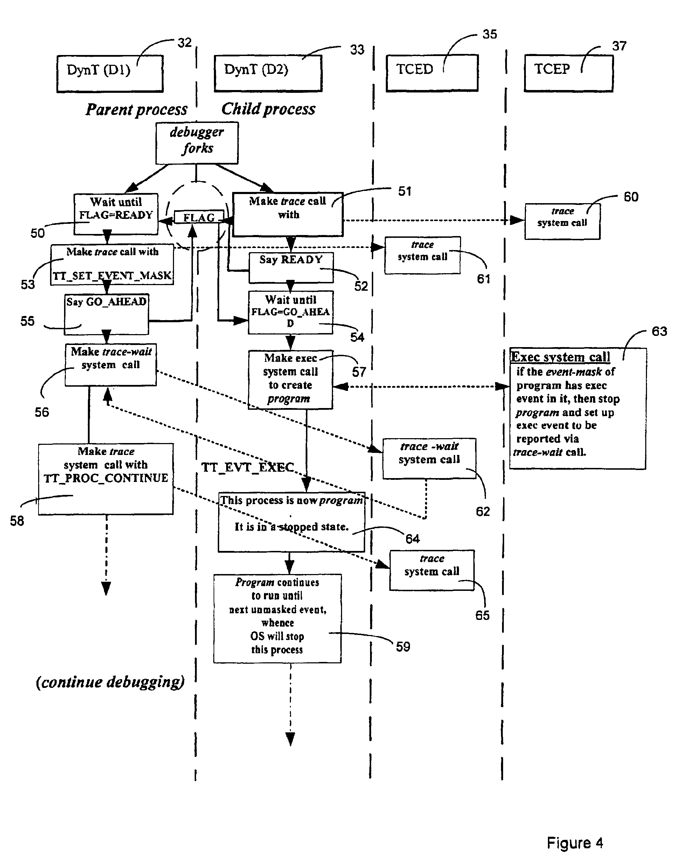

A method for implementing the invention will now be described by way of example and with reference to Figure 4.

*Initialisation of TCED/TFWD*

The user informs the *DynT* (D2) 32 at the time of starting the debugging session that a debugger needs to be emulated. *DynT (D2)* 32 will then invoke *TCED* 35 during startup for the first time and setup its own internal state so that each *trace/trace-wait* call made by *debugger* is passed on to *TCED* 35. *TCED* 35 initializes *TFWD* as soon as it is invoked by *DynT* (D1).
*TFWD* fields are initialized thus by *TCED:*

$$TFWD.status = NO\_REQ$$

$$TFWD.req = NONE$$

*Initialisation* of *TCEP/TFWP*

(a) When a *program* performs a *trace* call with the *request* as *TT_PROC_SETTRC, DynT (D2)* 33 invokes *TCEP* 37. *TCEP* 37 will then perform the following tasks and return to *DynT* (D2) 33:

  i. Create *TDTH*
  ii. Setup *TFWP* and initialize the fields of *TFWP* as: *TFWP.request unchanged.*
  iii. Make a corresponding trace call in the OS

(b) When a debugged program executes another program through the exec system call, then *TCEP* that is attached to the new program will create *TDTH* and attach itself to the existing *TCE Framework*. In this case the *TFWP.status* will not be set as in step *(a)* above.
  One way in which information about the on-going debugging session may be communicated across the exec system call is by the *DynT* (D2) inserting a special environment variable for the program being *exec'ed* so that the new *DynT that* automatically comes up, after exec system call succeeds, is able to recognize that it is emulating a debugged program and hence invoke TCEP appropriately.

(c) When the debugged program forks, and the user intends to debug the new process in place of the first one, then *TCEP* 37 in the child program will create *TDTH* and attach to the existing *TCE Framework.* Also, the parent debugged program will detach itself from the *TCE Framework* and the *TDTH* of the parent debugged program will be terminated.

In the following example a program is debugged by a debugger on a non-native platform.

A user starts a host-platform debugger, *debugger*, on the target platform using a software emulator and passes to it the name of the host-platform program, *program.* The user informs the *DynT* (D1) 32 that a debugging session is being initiated and the *DynT* (D1) 32 will perform the initializations to create the TCED 35 and the TFWD.

A means of communication (FLAG) is established by the parent and child processes.

The following steps are then performed:

In step 50, the parent debugger waits until the child debugger says that it has now permitted itself to be traced by the parent, with the help of the OS.

In step 51, the child debugger makes a trace call 60 in the OS with TT_PROC_SETTRC request. This step may occur concurrently with step 50. This request will be intercepted by *DynT (D2)* 33 and passed on to TCEP 37. TCEP 37 services the trace call as below:

| TRACE REQUEST | *TCED (cause)* | *TCEP (effect)* |
|---|---|---|
| TT_PROC_SETTRC | *No action* | 1. Create *TDTH*<br>2. Set up *TFWP*<br>3. Make *trace-call* with *request.*<br>4. Return to *DynT* |

In step 52, the child process has successfully performed the trace call and communicates the same to the parent debugger, via FLAG.

In step 53, the debugger now makes a trace call 61 to set an event-mask on the child process. The event mask will inform the TCED 35 as to which event the TCED 35 should consider for reporting to the debugger. In the present example, the debugger requests that if a TT_EVT_EXEC occurs in the child process it is reported. This call will be passed on to TCED 35 by *DynT* (D1) and the following actions are performed:

| TRACE REQUEST | *TCED (cause)* | *TCEP (effect)* |
|---|---|---|
| TT_PROC_SET_EVENT_MASK | 1.Set *TFWD.req=*<br>TT_PROC_SET_EVENT_MASK;<br>*TFWD.data1=<event mask passed by debugger>;*<br>*TFWD.status=REQ_READY;*<br>2. While (*TFWD.status -=*<br>*RESPONSE_READY) <donothing>*<br><br>4. Set ***Pdata.event_mask=****<event mask passed by debugger>*<br>*5. Return to DynT.* | *[ While (TFWD.status ～=*<br>*REQ READY) <donothing>]*<br><br><br>2. Set<br>***Pdata.event_mask****=TFWP.data1*<br>3. Set<br>*TFWP.status=*RESPONSE_READY |

In step 54, the child process waits until the *debugger finishes* with step 53.

In step 55, the *debugger* asks the child process to go ahead with *exec*'ing the *program* via FLAG. The *program* is the application that is passed by the user as a parameter to the debugger, intending to debug it.

In step 56, the *debugger* waits for the child process to encounter TT_EVT_EXEC. To do this it makes a trace-wait call 62 in blocking mode. This means that TCED 35 should stop the debugger itself until the child process hits upon at least one event in the event-mask as set by the debugger for that child process. TCED 35 services this trace-wait call thus:

| *trace-wait* call | *TCED (cause)* | *TCEP (effect)* |
|---|---|---|
| *trace-wait* with<br>blocking allowed, until | 1. Set *TFWD.req=TRACE_WAIT;*<br>*TFWD.status=REQ_READY* | *[ While (TFWD.status -= REQ_READY)*<br>*<donothing>]* |

(continued)

| trace-wait call | TCED (cause) | TCEP (effect) |
|---|---|---|
| event occurs. | 2. While (*TFWD.status* ~= *EVENT_FOUND*) OR (*TFWD.status* -= *NO_EVENT_FOUND*) <donothing> | 2. For each **Thd_id** do begin     if (**Thd_id.event** *1*= 0) then     begin        Set *TFWP.event=**Thd_id.event***        Set *TFWP.status=EVENT_FOUND*        return to *DynT*     end |
| | 3. If (*TFWD.status* ~= *EVENT_FOUND*) then return to *DynT, TFWD.event* else go to step 1. | end Set *TFWP.status=NO_EVENT_FOUND* |

In step 57, whilst the debugger is blocking in *trace-wait* call, the child process goes on to *exec* the *program. DynT* (D2) will retain the event-mask and the SETTRC status that was set for the child process, for the new process *program.* Because of the child process *exec*'ing *program* the following actions in step 63 take place:

| Event description (Event name) | Unix system call that may lead to the event | TCEP actions (entry into *TCEP* is when *DynT* reports the corresponding system call entry to *TCEP)* |
|---|---|---|
| Program converting itself to another program (TT_EVT_EXEC) | exec | 1. Insert a special environment variable into the environment variable list of the new program 2. Perform exec system call 3. The new *program* will recognize this environment variable with the help of *DynT* and initialize *TCEP*. 4. This new *TCEP* will, - create debug thread - setup *TFWP* - setup exec event in **Thd_id.event** - suspend self in step 64 until unless continued by the debugger. |

As soon as the child process performs step 57, the blocking while loop in TCED established in step 56 above will be broken and a TT_EVT_EXEC event data is returned to the debugger. This data contains all the information about the child process at that stage of this execution. From now on the child process is completely under the control of the *debugger.*

In step 58, the *debugger* performs a trace call 65 and requests TCED to continue the child process, which the TCED services appropriately.

In step 59, the *TCED* continues the *program.* The *program* is subject to the same event mask that was set by the debugger on the child process in step 53 above.

*Preferred deployment of the invention*

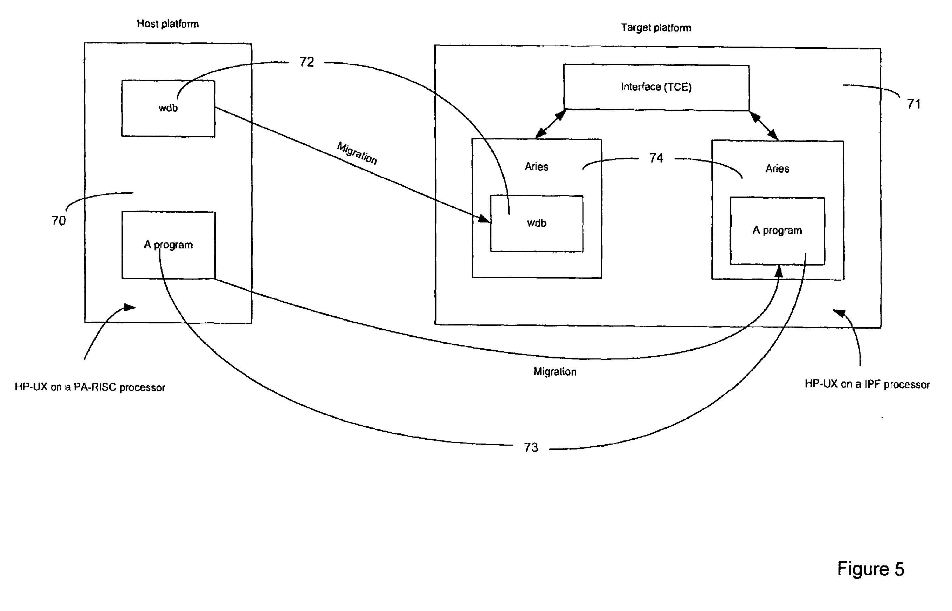

A preferred deployment of the method and system will now be described with reference to Figure 5.

In this implementation, the host platform 70 is HP-UX OS running on PA-RISC processor and the target platform 71 is HP-UX OS running on IPF (Itanium) processors based on Intel's IA-64 architecture.

The debugger 72 used is HP's wdb, which is a gdb-based debugger available on HP-UX/PA-RISC platforms.

The *program* 73 is any software compiled with "-g" compiler option on a HP-UX/PA-RISC platform. The software emulator 74 that is used for the implementation of the current invention is Aries. Aries is a "dynamic translation"-based software emulator that transparently runs all HP-UX/PA-RISC applications on HP-UX/IPF.

It is preferred that the invention is implemented in a UNIX environment, although it will be appreciated that the invention may be implemented under any operating system. It is preferred that the operating system has similar concepts to the UNIX OS, such as the concepts of processes, threads, signals, and system calls.

*Results of testing the invention*

The invention has been tested using a wdb test-suite that contains about 11,000 tests under above deployment conditions with all the test cases passing. The test cases cover almost all facets of wdb commands and wdb-functionality.

Under this implementation there is a negligible performance hit to the users of wdb. Regardless of the introduction of an extra layer of communication in the form of *TCE Framework*, practical observation says that due to the user-input-intensive nature of the debugger itself, the actual performance degradation is not visible to an extent that it affects debugging in any manner.

*Additional implementation details*

It is preferred that the operating system supports at least some of the following events:

| Event description | Unix system call that may lead to the event generation | Name of the event generated |
|---|---|---|
| Process creation | fork | TT_EVT_FORK |
| Process termination | exit | TT_EVT_EXIT |
| Process replacing itself by another process | exec | TT_EVT_EXEC |
| Thread creation | _lwp_create | TT_EVT_LWP_CREATE |
| Thread termination | _lwp_terminate | TT_EVT_LWP_TERMINATE |
| Thread exit | _lwp_exit | TT_EVT_LWP_EXIT |
| Exceptions (on Unix, exceptions generate signals. Signals can be posted by a user or another process or may be generated during execution by the OS) | **Any excepting operation performed by a thread** | TT_EVT_SIGNAL |
| Entry into OS mode | **any system call** | TT_EVT_SYSCALL_ENTRY |
| Return from OS mode | **any system call** | TT_EVT_SYSCALL_RETURN |
| Restarted OS service (restarted system call, on Unix) | **any restarted system call** | TT_EVT_SYSCALL_RESTART |
| Aborted OS service (aborted system call, on Unix) | **Any system call that is aborted by _lwp_abort_syscall() system call** | TT_EVT_ABORT_SYSCALL |
| Break-point single step | **any event** | TT_EVT_BPT_SSTEP |

Specific detail is given below for how an implementation of the invention manages the above events:

| Event description (Event name) | Unix system call that may lead to the event | *TCEP* actions (entry into *TCEP* is when *DynT* reports the corresponding system call entry to *TCEP*) |
|---|---|---|
| Program creation (TT_EVT_FORK) | fork | 1. in the parent *program* - setup fork event in **Thd_id..event** |

(continued)

| Event description (Event name) | Unix system call that may lead to the event | *TCEP* actions (entry into *TCEP* is when *DynT* reports the corresponding system call entry to *TCEP)* |
|---|---|---|
| | | - suspend self until unless continued by debugger. <br> 2. In the child *program* <br> - create debug thread <br> - setup *TFWP* <br> - setup fork event in ***Thd_id.event*** <br> - suspend self until unless continued by debugger. |
| Program termination (TT_EVT_EXIT) | exit | 1. Setup exit event in ***Thd_id.event*** <br> 2. suspend other threads in *program* <br> 3. suspend self until unless continued by the debugger. |
| Program converting itself to another program <br><br> (TT_EVT_EXEC) | exec | 1. Insert a special environment variable into the environment variable list of the new program <br> 2. Perform exec system call <br> 3 The new *program* will recognize this environment variable with the help of *DynT* and initialize *TCEP*. <br> 4 This new *TCEP* will, <br> - create debug thread <br> - setup *TFWP* <br> - setup exec event in ***Thd_id.event*** <br> - suspend self until unless continued by debugger. |
| Thread creation (TT_LWP_CREATE) | _lwp_create | 1. sets up thread creation event in ***Thd_id.event*** <br> 2. suspend self until unless continued by the debugger. |
| Thread termination (TT_EVT_LWP_TERMINATE) | _lwp_terminate | 1. sets up thread termination event in ***Thd_id.event*** <br> 2. suspends self until unless continued by the debugger. |
| Thread exit <br><br> (TT_EVT_LWP_EXIT) | _lwp_exit | 1. sets up thread exit event in ***Thd_id.event*** <br> 2. suspends self until unless continued by the debugger. |
| An aborted system call in a <br><br> thread <br> (TT_EVT_ABORT_SYSCALL) | **_lwp_abort_syscall** | 1. sets up thread abort syscall event in ***Thd_id.event*** <br> 2. suspends self until unless continued by the debugger. |
| Exceptions | **None** | 1. sets up signal event in ***Thd_id. event*** |

(continued)

| Event description (Event name) | Unix system call that may lead to the event | *TCEP* actions (entry into *TCEP* is when *DynT* reports the corresponding system call entry to *TCEP*) |
|---|---|---|
| (on Unix, exceptions generate signals. Signals can be posted by a user or another program or may be generated during execution by the OS/hardware) (TT_EVT_SIGNAL) | | 2. suspends self until unless continued by the debugger. |
| Entry into a system call (TT_EVT_SYSCALL_ENTRY) | **any system call** | 1. sets up syscall entry event in **Thd_id.event** 2. suspends self until unless continued by the debugger. |
| Return from a system call (TT_EVT_SYSCALL_RETURN) | **any system call** | 1. sets up syscall return event in **Thd_id.event** 2. suspends self until unless continued by the debugger. |
| Restarted system call (TT_EVT_SYSCALL_RESTART) | **any restarted system call** | 1. sets up syscall restart event in **Thd_id.event** 2. suspends self until unless continued by the debugger. |
| Break-point single step (TT_EVT_BPT_SSTEP) | **program hitting a breakpoint** | 1. sets up breakpoint single step event in **Thd_id.event** 2. suspends self until unless continued by the debugger. |

Specific details for how the debugger in an implementation of the invention requests event data of pending events in the program is given below:

| trace-wait call | *TCED (cause)* | *TCEP (effect)* |
|---|---|---|
| *trace-wait* with blocking allowed, until event occurs. | 1. Set *TFWD.req=TRACE_WAIT;* *TFWD.status=REQ_READY* 2. While *(TFWD.status ~= EVENT_FOUND) OR (TFWD.status -= NO_EVENT_FOUND)* *<donothing>* 3. If (*TFWD.status ~= EVENT_FOUND*) then return to *DynT, TFWD.event* else go to step 1. | *[ While (TFWD.status ~= REQ_READY)* *<donothing>]* 2. For each **Thd_id** do begin    if (**Thd_id.event 1= 0)** then    begin       Set *TFWP.* *event=**Thd_id.event***       Set *TFWP.* *status=EVENT_FOUND*        return to *DynT*    end end Set *TFWP.* *status=NO_EVENT_FOUND* |

(continued)

| trace-wait call | TCED (cause) | TCEP (effect) |
|---|---|---|
| *trace-wait* with blocking not allowed. | 1. Set *TFWD.req=TRACE_WAIT; TFWD.status=REQ_READY*<br>2. While (*TFWD.status ~= EVENT_FOUND) OR (TFWD.status -= NO_EVENT_FOUND)* <donothing> | [ *While (TFWD.status ~= REQ_READY) <donothing>*]<br><br>2. For each **Thd_id** do<br>begin<br>    if (**Thd_id.event 1= 0)** then<br>    begin<br>        Set *TFWP.* event=**Thd_id.event**<br>        Set *TFWP. status=EVENT_FOUND*<br>        return to *DynT*<br>    end |
| | 3. 3. If (*TFWD.status ~= EVENT_FOUND*) then return to *DynT, TFWD.event*<br>else return "no event found" status to *DynT (which will be returned to debugger by DynT)* | end |

The invention is capable of supporting a number of tracing calls, including:

*Process-wide requests*

- Enable the calling process to be debugged/traced by another process which has required permissions (**TT_PROC_SETTRC**),
- Attach the debugger to a process already running (**TT_PROC_ATTACH**),
- Detach the debugger from a debugged process (**TT_PROC_DETACH**),
- Read from process's data area in memory (**TT_PROC_RDDATA**),
- Read from process's code/text area in memory (**TT_PROC_RDTEXT**),
- Write into process's data area in memory (**TT_PROC_WRDATA**),
- Write into process's text area in memory (**TT_PROC_WRTEXT**),
- Get the process's pathname (**TT_PROC_GET_PATHNAME**),
- Get the process's current process-wide debug event mask (**TT_PROC_GET_EVENT_MASK**),
- Set the process's current program-wide debug event mask (**TT_PROC_SET_EVENT_MASK**),
- Stop the process (**TT_PROC_STOP**),
- Continue the process (**TT_PROC_CONTINUE**),
- Get the page protection bits from the given page belonging to the virtual memory of the process (**TT_PROC_GET_MPROTECT**),
- Set the page protection of the given page belonging to the virtual memory of the process to the given value (**TT_PROC_SET_MPROTECT**),
- Set the system call bit mask (**TT_PROC_SET_SCBM**); *system call bit mask controls the event reporting of the system call entry and exit events.*
- Force the process to exit (**TT_PROC_EXIT**),
- Force the OS to dump the memory and context of the process (**TT_PROC_CORE**),

*Thread-specific requests*

- Stop a thread of the process (**TT_LWP_STOP**),
- Continue a stopped thread of the process. This request could be accompanied with a signal number (on Unix OS) which is to be delivered to the process by the OS as soon as it starts execution. (**TT_LWP_CONTINUE**),
- Get the state of the first stopped thread belonging to the process (**TT_LWP_GET_FIRST_LWP_STATE**),
- Get the state of the next stopped thread belonging to the process (**TT_LWP_GET_NEXT_LWP_STATE**),
- Single-step a thread in the process (**TT_LWP_SINGLE**),
- Get the thread-wide debug event mask of a thread belonging to the process (**TT_LWP_GET_EVENT_MASK**),
- Set the thread-wide debug event mask of a thread belonging to the process (**TT_LWP_SET_EVENT_MASK**),
- Get the runtime context /state of a thread belonging to the process (**TT_LWP_GET_STATE**),
- Read the register contents of a thread belonging to the process (**TT_LWP_RUREGS**)
- Write into the of a thread belonging to the process (**TT_LWP_WUREGS**)

Specific details on how an implementation of the invention might support the above tracing calls are given below:

| TRACE REQUEST | TCED (cause) | TCEP (effect) |
|---|---|---|
| TT_PROC_SETTRC | No action | 1. Create TDTH<br>2. Set up TFWP<br>3. Make trace-call with request<br>4. Return to DynT |
| TT_PROC_DETACH | 1. Make trace-call with request.<br>2. Set TFWD.req = request; TFWD.status = REQ_READY<br>3. Return to DynT. | [ While (TFWD.status ~= REQ_READY) <donothing>]<br><br>3. Terminate TDTH<br>4. Inform DynT that program is no longer "traced", so that DynT doesn't pass on trace- call requests to TCEP from then on. |
| TT_PROC_RDTEXT | 1. Make trace-call with request | [ While (TFWD.status ~= REQ_READY) <donothing>] |
| TT_PROC_RDDATA | 1. Make trace-call with request | [ While (TFWD.status ~= REQ_READY) <donothing>] |
| TT_PROC_WRTEXT<br>TT_PROC_WRDATA | 1. Set TFWD.req=request; TFWD.status=REQ_READY<br>2. While (TFWD.status ~= RESPONSE_READY) <donothing> RESPONSE_READY) <donothing><br><br><br><br><br>5. Make trace-call with request | [ While (TFWD.status ~= REQ_READY) <donothing>]<br>2. For each **Thd_id,** if thread is<br><br>running state, stop it and set **Thd_id.state** to TEMPORARILY_STOPPED<br>3. Set TFWP.status = RESPONSE_READY<br>4. [ While (TFWD.status ~= REQ_READY) <donothing>] |

(continued)

| TRACE REQUEST | TCED (cause) | TCEP (effect) |
|---|---|---|
| | 6. Set *TFWD.req = request; TFWD.data1 =* <address at which write was performed>; *TFWD.data2 =* <number of bytes written>; Set *TFWD.status=REQ_READY*<br>7. While (*TFWD.status ~= RESPONSE_READY) <donothing>*<br><br>11. Set, *TFWD.req= TEMPORARY_CONTINUE_ALL_THREADS; TFWD.status=REQ_READY;* and return to *DynT.* | 8. For each translation in Ccache, if its source address falls within the range, [*TFWP.data1, TFWP.data1+TFWP.data2*] then, remove that translation from **Ccache.**<br>9. Set *TFWP.status = RESPONSE_READY*<br>10. [ *While (TFWD.status ~= REQ_READY) <donothing>*]<br><br>12. For each **Thd_id,** if (**Thd_id.state == ***TEMPORARILY_STOPPED),* then restore it to running state and **Thd_id.state** to original value |
| TT_PROC_GET_PATHNAME | 1. Make *trace-call* with *request* | *No action* |
| TT_PROC_SET_EVENT_MASK | 1.Set *TFWD.req=* TT_PROC_SET_EVENT_MASK; *TFWD.data 1=<event mask passed by debugger>; TFWD. status=REQ_READY;*<br>2. While *(TFWD.status ~= RESPONSE_READY) <donothing>*<br><br>4. Set **Pdata.event_mask=***<event mask passed by debugger>*<br>5. Return to *DynT.* | [ *While (TFWD.status ~= REQ_READY) <donothing>*]<br><br>2. Set **Pdata. event_mask=***TFWP.dat a1*<br>3. Set *TFWP.status=*RESPONSE_RE ADY |
| TT_PROC_GET_EVENT_MASK | 1. Return to *DynT,* **Pdata.event_mask** (set by SET_EVENT_MASK request) | *No action* |
| TT_PROC_STOP | 1. Set *TFWD.req=request; TFWD. status=REQ_READY*<br>2. While *(TFWD.status ~= RESPONSE_READY) <donothing>*<br><br><br>5. Return to *DynT* | [ *While (TFWD.status ~= REQ_READY) <donothing>*]<br>3. For each **Thd_id,** stop the thread if active, and set **Thd_id.state=***STOPPED_BY_ TDTH_TRACE*<br>4. Set *TFWP. status=*RESPONSE_RE ADY |

(continued)

| TRACE REQUEST | TCED (cause) | TCEP (effect) |
|---|---|---|
| TT_PROC_CONTINUE | 1. Set *TFWD.req=request; TFWD. status=REQ_READY*<br>2. While *(TFWD.status ~= RESPONSE_READY) <donothing>*<br><br><br><br><br><br>5. Return to *DynT* | [ *While (TFWD.status ~= REQ_READY) <donothing>]*<br>3. For each ***Thd_id,*** if ( ***Thd_id. state**=STOPPED_BY_ TDTH_TRACE* **OR** ***Thd_id. state**=STOPPED_DU E_TO_EVENT*) then continue that thread.<br><br>4. Set *TFWP. status=RESPONSE_RE ADY* |
| TT_LWP_STOP | 1. Set *TFWD.req=request; TFWD. data1=<thread id of the thread to be*<br><br>*acted upon>; TFWD.status=REQ_READY; 2. _READY) <donothing>*<br><br>While *(TFWD.status ~= RESPONSE*<br><br><br><br><br><br>5. Return to *DynT* | [ *While (TFWD.status ~= REQ_READY) <donothing>]*<br><br>2. Stop the thread whose id is *TFWP.data1,* if active.<br>*3.* For the ***Thd_id*** corresponding to *TFWP.data1,* Set ***Thd_id. state=** STOPPED_BY_TDTH_TRACE*<br>4. Set *TFWP. status=RESPONSE_RE ADY* |
| TT_LWP_CONTINUE | 1. Set *TFWD.req=request; TFWD. data1=<thread id of the thread to be acted upon>;TFWD.data2=<Instruction address at which to continue the thread>;TFWD. status=REQ_READY;*<br>2. While *(TFWD.status ~= RESPONSE_READY) <donothing>*<br><br><br><br><br>5. Return to *DynT* | [ *While (TFWD.status ~= REQ_READY) <donothing>]*<br><br><br>2. For the ***Thd_id*** corresponding to *TFWP.data1,* Set ***Thd_id. state=** NOT_STOPPED_BY_TDTH*<br>3. Continue the thread whose id is *TFWP.data1*<br>4. Set *TFWP. status=RESPONSE_RE ADY* |
| TT_PROC_GET_FIRST_L WP_STATE | 1. Set *TFWD.req=request; TFWD. status=REQ_READY*<br><br>2. While *(TFWD.status ~= RESPONSE_READY) <donothing>*<br><br><br><br>4. Return to *DynT, TFWD.data1* | *[ While (TFWD.status ~= REQ_READY) <donothing>]*<br>2. Set *TFWP.data1=**Thd_id.tContext*** of the first stopped thread.<br>3. Set *TFWP.status=RESPONSE_RE ADY* |
| TT_PROC_GET_NEXT_L WP_STATE | 1. Set *TFWD.req=request; TFWD. status=REQ_READY* | [ *While (TFWD.status ~= REQ_READY) <donothing>]* |

(continued)

| TRACE REQUEST | TCED (cause) | TCEP (effect) |
|---|---|---|
| | | 2. Set |
| | 2. While (*TFWD.status ~= RESPONSE_READY*) *<donothing>* | *TFWP.data1=**Thd_id.tContext*** of the next stopped thread (*TCEP* needs *to remember the last returned thread*). 3. Set *TFWP. status=RESPONSE_RE ADY* |
| | 4. Return to *DynT, TFWD.data1* | |
| TT_PROC_GET_MPROTE CT | 1. Make *trace-call* with *request* | *No action* |
| TT_PROC_SET_MPROTEC T | 1. Make *trace-call* with *request* | *No action* |
| TT_PROC_SET_SCBM | 1. Set *TFWD.req=request; TFWD. data1=<bitmask> TFWD. status=REQ_READY;* 2. While (*TFWD.status ~= RESPONSE_READY*) *<donothing>* | [ *While (TFWD.status ~= REQ_READY) <donothing>*] 2. Set ***Pdata.scbm=**TFWP. data1* 3. Set *TFWP. status=RESPONSE_RE ADY* |
| | 4. Return to *DynT* | |
| TT_PROC_EXIT | 1. Make *trace-call* with *request* | *No action* |
| TT_PROC_CORE | 1. Set *TFWD.req=request; TFWD. status=REQ_READY* 2. While (*TFWD.status ~= RESPONSE_READY*) *<donothing>* | [ *While (TFWD.status ~= REQ_READY) <donothing>*] 2. Generate *program* core file. 3. Set *TFWP. status=RESPONSE_RE ADY* |
| | 4. Return to *DynT* | |
| TT_LWP_SINGLE | 1. Set *TFWD.req=request; TFWD. data1=<thread id* of *the thread to be acted upon>;TFWD.data2=<Instruction address at which to continue the thread>;TFWD. status=REQ_READY* 2. While (*TFWD.status ~= RESPONSE _READY*) *<donothing>* | [ *While (TFWD.status ~= REQ_READY) <donothing>*] 2. For the ***Thd_id** corresponding to *TFWP.data1*, Set ***Thd_id. break_after_one_inst ruction**=1* 3. Continue that thread. 4. Set *TFWP. status=RESPONSE_RE ADY* |
| | 5. Return to *DynT*. | |
| TT_LWP_SET_EVENT_M ASK | 1. Set *TFWD.req=request; TFWD. data1=<thread id of the thread to be acted upon>;TFWD.data2=<new event mask to be set>; TFWD.status=REQ_READY* | [ *While (TFWD.status ~= REQ_READY) <donothing>*] |

(continued)

| TRACE REQUEST | TCED (cause) | TCEP (effect) |
|---|---|---|
| | 2. Set **Thd_id..event_mask=**<event mask passed by debugger> for the given thread | 2. Set **Thd_id. event_mask=**TFWP.d ata2, for the thread whose id is TFWP.data1 |
| | 4. While (TFWD.status ~= RESPONSE_READY) <donothing><br>5. Return to DynT | 3. Set TFWP. status=RESPONSE_RE ADY |
| TT_LWP_GET_EVENT_M ASK | 1. Return to DynT, **Thd_id.event_mask** of the concerned thread | No action |
| TT_LWP_GET_STATE | 1. Set TFWD.req=request; TFWD. data1=<thread id of the thread to be acted upon>; TFWD.status=REQ_READY<br>2. While (TFWD.status ~= RESPONSE_READY) <donothing> | [ While (TFWD.status ~= REQ_READY) <donothing>] |
| | 3. Return to DynT TFWD.data2. | 3. Set TFWP.data2=**Thd_id. tContext** for the thread whose id is TFWP.data1; TFWP. status=RESPONSE_RE ADY |
| TT_NDR_GET_FLEV | 1. Make trace-call with request | No action |
| TT_LWP_RUREGS | 1. Map each debugger requested register to **Thd_id.tContext's** user register area in program.<br>2. Makes trace-call with request TT_PROC_RDDATA to read data from the remapped program's memory address (containing user registers emulated by DynT) arrived at in step **1** above.<br>3. Return this data to DynT | No action |
| TT_LWP_WUREGS | 1. Map each debugger requested register to **Thd_id.tContext's** user register area in program.<br>2. Makes trace-call with request TT_PROC_WRDATA to write data into the mapped program's memory address (containing user registers emulated by DynT) arrived at in step 1 above.<br>3. Return to DynT | No action |

The present invention has the following advantages:

- An application being migrated from platform A to platform B can be debugged in the absence of platform A systems, if the debugger of platform A is available.

- An application being migrated from platform A to platform B can be debugged without the need for networking A and B systems in order to run the debugger remotely from A.

- Programs can be supported on a non-native platform by enabling the debugging of that program on the platform when the native platform is no longer available.

- Up until now all components of the development tool-chain, except the debugger, from the host platform could be run on the target platform through a software emulator. These include compilers, linkers, etc. With this invention the missing link that the execution of the debugger is made possible. Hence using this invention and pre-existing capabilities of the software emulator, the entire tool-chain of the host platform can be provided on the target platform.

- This invention can be used to verify correct emulation by the software emulator itself. Utilities, like gdb or tusc, can be used to compare at specific points the state of the debugged or traced program first using the invention within the software emulator on the target platform and second on the host platform itself. Such comparison is often very useful in localising the area where the software emulator may be emulating the program incorrectly.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A method of executing programs on a non-native platform, including the step of:

    i) executing a plurality of programs in two or more software emulators;

    wherein during the execution of the programs at least one program monitors or controls at least one other program's threads or processes using an interface.

2. A method as claimed in claim 1 wherein each program executes within a separate software emulator.

3. A method as claimed in claim 2 wherein the interface is between the software emulator of the monitoring/controlling program and the software emulator of the monitored/controlled program.

4. A method as claimed in claim 3 wherein each software emulator is emulating the same platform.

5. A method as claimed in claim 4 wherein all the software emulators are executing on a single computer system.

6. A method as claimed in claim 5 wherein the computer system is UNIX-based.

7. A method as claimed in claim 5 wherein each software emulator is a dynamic translation software emulator.

8. A method as claimed in claim 1 wherein the monitoring/controlling program is a debugging program and the monitored/controlled program is a program to be debugged.

9. A method as claimed in claim 8 wherein the debugging program is a gdb-based debugger.

10. A method as claimed in claim 1 wherein the interface includes:

    i) a first module which interfaces with the software emulator of the monitoring/controlling program;
    ii) a second module which interfaces with the software emulator of the monitored/controlled program; and
    iii) a framework through which the first and second module communicate.

11. A method as claimed in claim 10 wherein the framework is an inter-process data exchange mechanism.

12. A method as claimed in claim 11 wherein the inter-process data exchange mechanism is an inter-process communications primitive.

13. A method as claimed in claim 12 wherein the inter-process communications primitive is any one selected from the set of pipe, socket, and shared memory area.

14. A method as claimed in claim 10 wherein the second module includes a thread which polls for requests received through the framework and services the requests when they arrive.

15. A method as claimed in claim 10 wherein the first module processes trace and trace-wait system calls made by the monitoring/controlling program.

16. A method as claimed in claim 10 wherein the second module services requests received from the first module through the framework.

17. A method as claimed in claim 1 wherein each software emulator intercepts each entry into OS mode made by the emulated program and notifies the interface.

18. A method as claimed in claim 1 wherein the software emulator of the monitoring/controlling program and the software emulator of the monitored/controlled program execute on different computer systems.

19. A method as claimed in claim 1 wherein the monitoring/controlling program is a tracing program.

20. A method as claimed in claim 1 wherein the monitoring/controlling includes the use of trace and trace-wait system calls.

21. A system for executing programs on a non-native platform including:

    i) a first software emulator adapted to execute a first program, to intercept calls from the first program to monitor or control the processes or threads of a second program, and to transmit the calls to an interface system;
    ii) a second software emulator adapted to execute the second program, to receive the calls from the interface system, and to effect the calls on the processes or threads of the second program; and
    iii) an interface system adapted to receive the calls from the first software emulator and to transmit the calls to the second software emulator.

22. A system as claimed in claim 21 wherein the second software emulator is further adapted to intercept responses to the calls from the second program and to transmit the responses to the interface system, the interface system is further adapted to receive the responses from the second software emulator and transmit the responses to the first software emulator, and the first software emulator is further adapted to receive the responses and to send the responses to the first program.

23. A system as claimed in claim 22 wherein the first program is a debugging program.

24. A method of debugging a program on a non-native platform, including the steps of:

    i) executing a debugging program on a first software emulator;
    ii) executing the program on a second software emulator;
    iii) the debugging program making calls to trace into the processes or threads of the program; and
    iv) transmitting the calls using an interface from the first software emulator to the second software emulator.

25. Software for effecting the method of claim 1.

26. Storage media containing software as claimed in claim 25.

27. A computer system for effecting the method of claim 1.

28. A program debugged by the method of claim 24.

Figure 1

OS

debugger
forks

Parent process          Child process

Wait until
FLAG=READY          FLAG          Make *trace* call
with                                                 11

10                                                                              *trace*
system call          22

Make *trace* call with                                              *trace*
system call          23
TT_SET_EVENT_MASK                    Say READY

13                                                                                      12          **Exec system call**
if the *event-mask* of
Say GO_AHEAD          Wait until                        program has exec
FLAG=GO_AHEA          event in it, then stop          18
D          14          *program* and set up
15                                                                          exec event to be
Make *trace-wait*          Make exec          reported via
system call          system call          *trace-wait* call.
to create
*program*
16                                                      17

TT_EVT_EXEC          *trace -wait*
system call          24

Make *trace*
system call with          19          This process is now *program*
TT_PROC_CONTINUE          .          25
It is in a stopped state.

20

(continue debugging)          *Program* continues
to run until
next unmasked event,
whence          21
OS will stop
this process

Figure 2

**Figure 3**

EP 1 508 858 A2

Figure 4

Host platform

Target platform

72

Interface (TCE)

71

wdb

Aries

74

Aries

Migration

wdb

A program

70

A program

HP-UX on a PA-RISC processor

Migration

HP-UX on a IPF processor

73

Figure 5

EP 1 508 858 A2